# EUROPÄISCHE PATENTSCHRIFT

(11) **EP 2 718 500 B1**
(45) Veröffentlichungstag und Bekanntmachung des Hinweises auf die Patenterteilung: **25.11.2015**
(21) Anmeldenummer: 12725758.2
(22) Anmeldetag: 04.06.2012
(51) Int. Cl.: E01C 23/088, E01C 19/00

(54) **VERFAHREN UND VORRICHTUNG ZUM BESTIMMEN EINER VON MINDESTENS EINER BAUMASCHINE ODER ABBAUMASCHINE MIT EINER FRÄSWALZE GEFRÄSTEN FLÄCHE**
METHOD AND DEVICE FOR DETERMINING AN AREA CUT WITH A CUTTING ROLL BY AT LEAST ONE CONSTRUCTION MACHINE OR MINING MACHINE
PROCÉDÉ ET DISPOSITIF POUR DÉTERMINER UNE SURFACE FRAISÉE PAR AU MOINS UNE MACHINE DE CHANTIER OU UNE MACHINE D'ABATTAGE POURVUE D'UN TAMBOUR DE FRAISAGE

(30) Priorität: 10.06.2011 DE 102011106139
(43) Veröffentlichungstag der Anmeldung: 16.04.2014
(73) Patentinhaber: Wirtgen GmbH, 53578 Windhagen (DE)
(72) Erfinder: PAULSEN, Sven, 53177 Bonn-Bad Godesberg (DE); WAGNER, Stefan, 53604 Bad Honnef (DE); BARIMANI, Cyrus, 53639 Königswinter (DE); HÄHN, Günter, 53639 Königswinter (DE)
(74) Vertreter: Von Kreisler Selting Werner - Partnerschaft von Patentanwälten und Rechtsanwälten mbB
(86) Internationale Anmeldenummer: PCT/EP2012/060505
(87) Internationale Veröffentlichungsnummer: WO 2012/168186

(56) Entgegenhaltungen:
- EP-A1- 2 119 832
- DE-C1- 19 756 676
- JP-A- 9 125 700

## Beschreibung

Die Erfindung betrifft ein Verfahren zum Bestimmen einer von mindestens einer Baumaschine oder mindestens einer Abbaumaschine mit einer Fräswalze gefrästen Fläche, sowie eine Baumaschine oder Abbaumaschine zum Bearbeiten einer vorgegebenen Fläche nach dem Oberbegriff des Anspruchs 9.

Eine solche Maschine ist z.B. aus EP 2 119 832 A bekannt.

Beim Bearbeiten von Boden- oder Verkehrsflächen mittels Fräsen, Stabilisierern oder Recyclern, sowie beim Abbauen von Vorkommen mittels Abbaumaschinen (Surface Miner) wird für die Dokumentation und die Abrechnung der Dienstleistung auf der Baustelle üblicherweise die gefräste Fläche und/oder das gefräste Volumen als Basis für die Abrechnung der Dienstleistung benötigt. Diese Daten werden beispielsweise aus zuvor bekannten bzw. bestimmten Daten aus Kartenmaterial oder Vermessungsunterlagen bestimmt oder geschätzt, wobei hier vereinfachend davon ausgegangen wird, dass die tatsächlich gefräste Fläche bzw. das tatsächlich gefräste Volumen genau der vorher im Auftrag genannten zu fräsenden Fläche bzw. dem zu fräsenden Volumen entspricht.

Es ist auch bekannt, nach Abschluss der Fräsarbeiten mit Hilfe einfacher Messgeräte (z.B. Wegmessrad und Zollstock) eine mehr oder weniger genaue Bestimmung der gefrästen Fläche bzw. des gefrästen Volumens durchzuführen. Schließlich ist es auch bekannt, aus der von einer Maschinensteuerung herauslesbaren oder gemessenen Wegstrecke und einer Frästiefe unter der Annahme, dass die installierte Fräswalzenbreite der effektiv gefrästen Fräsbreite entspricht, einen Näherungswert für das momentan gefräste Volumen zu bestimmen und durch Integration ein Tagesvolumen zu ermitteln.

Es hat sich allerdings herausgestellt, dass die tatsächlich gefräste Fläche bzw. das tatsächlich gefräste Volumen in der Praxis von den in einem Dienstleistungsauftrag festgelegten geometrischen Daten bzw. den aus Vermessungsunterlagen oder Karten hergeleiteten Daten abweicht, wobei das tatsächlich gefräste Volumen in der Regel größer ist. Dies ist demzufolge für das Dienstleistungsunternehmen nachteilig, da die ungenaue Abrechnung zu seinen Lasten geht. Ein Grund hierfür kann z.B. die Dreidimensionalität eines Streckenverlaufs z.B. eines Autobahnabschnitts in einer hügeligen Gegend sein, weil die Länge einer Frästrajektorie in der Kartenprojektion geringer ist als in dem dreidimensionalen Streckenverlauf. Einen weiteren Grund bilden Zusatzarbeiten, die vor der Auftragsvergabe nicht bekannt oder nicht absehbar waren und deshalb in den Vermessungsunterlagen oder Karten nicht wiedergegeben sind.

Das Aufmessen mit einfachen Messmitteln (Wegmessrad, Zollstock) ist auch nur eine mehr oder weniger genaue Annäherung an die tatsächlich erbrachte Dienstleistung, da häufig auch komplexe Fräsgeometrien bearbeitet werden, die mit einfachen Mitteln rechnerisch nicht zugänglich sind.

Derartige Abrechnungsmethoden sind nicht nur ungenau, sondern auch zeitaufwändig.

Der Erfindung liegt daher die Aufgabe zugrunde, ein Verfahren und eine Bau- oder Abbaumaschine zu schaffen, mit der die mit mindestens einer Bau- oder Abbaumaschine erbrachte Dienstleistung zeitnah, automatisch, mit hoher Genauigkeit und kostengünstig erfasst werden kann.

Zur Lösung dieser Aufgabe dienen die Merkmale der Ansprüche 1 und 9.

Bei einem Verfahren zum Bestimmen einer von mindestens einer Baumaschine oder von mindestens einer Abbaumaschine mit einer Fräswalze gefrästen Fläche sind folgende Schritte erfindungsgemäß vorgesehen:
- Bearbeiten einer vorgegebenen Fläche in mehreren Frästrajektorien durch mindestens eine Maschine,
- Bestimmen der Länge der Frästrajektorien, an denen ein Fräsbetrieb stattgefunden hat durch Auswerten der fortlaufenden Maschinenpositionen,
- Aufsummieren der bisher gefrästen Teilflächen als Produkt der Länge der Frästrajektorie und der installierten Breite der Fräswalze, wobei die entlang der Frästrajektorie aktuell gefräste Teilfläche fortlaufend oder nachträglich auf Überlappung oder mehrfache Überlappung mit bisher gefrästen Teilflächen geprüft wird und sich überlappende Teilflächen als Überlappungsflächen von den aufsummierten bisher gefrästen Teilflächen in Abzug gebracht werden, und
- die insgesamt aufsummierten gefrästen Teilflächen abzüglich der insgesamt festgestellten Überlappungsflächen die gefräste Fläche ergeben.

Die erfindungsgemäße Lösung hat den Vorteil, dass am Ende eines Arbeitstages oder am Ende eines Dienstleistungsauftrages die erbrachte Dienstleistung automatisch bestimmt wird und am Ende der Tätigkeit unmittelbar abrufbar ist.

Dabei werden Leerfräsungen und Überlappungen oder sogar mehrfache Überlappungen von Frästrajektorien automatisch berücksichtigt.

Ein besonderer Vorteil dieses Lösungsweges besteht darin, dass eine separate sensorische bzw. messtechnische Erfassung der aktuellen Überlappung nicht erforderlich ist. Vielmehr wird die Überlappung durch Auswertung genauer Positionsmessungen aus den Frästrajektorien bestimmt.

Die Bearbeitung der vorgegebenen Fläche erfolgt in mehreren Frästrajektorien mit einer oder mehreren Maschinen.

Die Längen der jeweiligen Frästrajektorien, an denen ein Fräsbetrieb stattgefunden hat, werden durch Auswerten der fortlaufenden Maschinenposition bestimmt.

Es wird dabei festgestellt, wann ein Fräsbetrieb stattfindet und wann nicht. Hierzu besteht die Möglichkeit, dass die Bedienungsperson die Information, manuell eingibt. Alternativ kann auch automatisch festgestellt werden, wann ein Fräsbetrieb stattfindet, z.B. indem festgestellt wird, ob sich die Fräswalze dreht oder nicht, oder ob das Transportband in Betrieb ist oder nicht, oder welche Leistung der Verbrennungsmotor aktuell erbringt. Ein solches Signal ist beispielsweise von der Maschinensteuerung abrufbar. Am besten geeignet ist allerdings ein Signal, dass die eingestellte oder aktuelle Frästiefe erfasst. Im Resultat können daher ausschließlich die bisher gefrästen Teilflächen als Produkt der Länge der Frästrajektorie und der installierten Breite der Fräswalze erfasst werden. Wegstrecken der Maschine, an denen kein Fräsbetrieb stattfindet, werden daher nicht aufsummiert.

Bei Beendigung der Fräsarbeiten sind die insgesamt aufsummierten gefrästen Teilflächen abzüglich der insgesamt festgestellten Überlappungsflächen als gefräste Fläche als Arbeitsergebnis z.B. von einem Speicher abrufbar.

Die Maschinenposition einer jeden Maschine wird anhand mindestens eines Referenzpunktes an der Maschine bestimmt. Der Referenzpunkt ist vorzugsweise, oberhalb der Fräswalze, z.B. auf dem Dach eines Fahrstandes angeordnet. Besonders bevorzugt ist ein Referenzpunkt, der orthogonal zum Maschinenrahmen in einer gemeinsamen vertikalen Ebene durch die Fräswalzenachse liegt, wenn die Maschine auf einer horizontalen Ebene steht.

Zur Bestimmung der Maschinenposition wird vorzugsweise mindestens ein GNSS-Empfänger (Global Navigation Satellite System) verwendet. Ein solches System zur Positionsbestimmung und Navigation nutzt Signale von Navigationssatelliten und/oder Pseudoliten.

Es besteht auch alternativ die Möglichkeit, zusätzlich Referenzpositionsdaten eines ortsfesten GNSS-Empfängers oder eines Datenreferenzdienstes zu verwenden, um die Genauigkeit zu steigern.

Alternativ zu einer Positionsbestimmungseinrichtung auf Basis eines GNSS-Empfängers kann auch eine Totalstation verwendet werden. Eine Totalstation ist ein elektronischer Theodolit, integriert mit einer elektronischen Entfernungsmesseinrichtung, um die Neigung und den Abstand des Instrumentes von dem Referenzpunkt zu messen.

Bei Empfangsstörungen des mindestens einen an der Maschine angebrachten GNSS-Empfängers können die fehlenden oder fehlerhaften Positionsdaten aufgrund des bisherigen und weiteren Verlaufs der Frästrajektorien oder aufgrund aufgezeichneter Vorschub- und Lenkwinkeldaten aus der Maschinensteuerung der Maschine als Ersatzdaten berechnet oder korrigiert werden.

Hierzu kann vorgesehen sein, dass der Rechner bei Empfangsstörungen des mindestens einen an einer Maschine angebrachten GNSS-Empfängers zu fehlenden oder fehlerhaften Positionsdaten Ersatzdaten durch Interpolation aus in Relation zum Zeitpunkt der Empfangsstörung früheren und späteren Positionsdaten berechnet oder Ersatzdaten aus von der jeweiligen Maschinensteuerung aufgezeichneten Vorschub- und Lenkwinkeldaten berechnet.

Die aufgezeichneten Positionsdaten vor und hinter einer Datenlücke aufgrund von Empfangsstörungen können demzufolge durch interpolierte Ersatzdaten ergänzt werden, so dass ein lückenloser Verlauf der Frästrajektorien verwertet werden kann.

Die Positionsdaten und die Referenzpositionsdaten können drahtlos auf einen externen Rechner übertragen werden. Dies ist besonders vorteilhaft, wenn die Daten mehrerer Maschinen zur Berechnung der erbrachten Fräsarbeit ausgewertet werden sollen.

Zum Bestimmen des gefrästen Volumens entlang der Frästrajektorien kann die aktuelle Frästiefe in der Mitte der Fräswalze (in Längsrichtung gesehen) oder das aktuelle Frästiefenquerprofil in Abhängigkeit der Maschinenposition erfasst werden, wobei sich das gefräste Volumen aus den insgesamt aufsummierten Teilvolumina abzüglich der insgesamt festgestellten Überlappungsvolumina ergibt. Dabei können auch unterschiedliche Frästiefen hinsichtlich der einzelnen Frästrajektorien berücksichtigt werden.

Bei diesem Verfahren wird in vorteilhafter Weise die aktuelle Frästiefe bzw. ein Frästiefenquerprofil zu jeder aktuellen Position der Maschine längs der Frästrajektorie mit abgespeichert.

Bei einer Baumaschine oder Abbaumaschine zum Bearbeiten einer vorgegebenen Fläche in mehreren Frästrajektorien durch mindestens eine Maschine, mit jeweils einer Fräswalze einer vorgegebenen Fräsbreite, einer Positionsbestimmungseinrichtung und einer Maschinensteuerung, ist vorgesehen, dass
- die Positionsbestimmungseinrichtung einer jeden Maschine Positionsdaten der mindestens einen Maschine erzeugt,
- ein Rechner für alle Maschinen die Positionsdaten der jeweiligen Maschine erhält und in Verbindung mit der Fräsbreite der jeweils installierten Fräswalze aus den fortlaufenden Positionsdaten die Länge der jeweiligen Frästrajektorie, an der ein Fräsbetrieb stattgefunden hat und die gefräste Fläche entlang dieser Frästrajektorie berechnet und als bisher gefräste Teilfläche aufsummiert,
- der Rechner die aktuell gefräste Teilfläche aller Maschinen fortlaufend oder nachträglich auf Überlappung oder mehrfache Überlappung mit bisher aufsummierten Teilflächen aller Maschinen prüft,
- der Rechner sich überlappende Teilflächen als Überlappungsflächen von den aufsummierten gefrästen Teilflächen in Abzug bringt,
- wobei die insgesamt aufsummierten bisher gefrästen Teilflächen abzüglich der insgesamt berechneten Überlappungsflächen die gefräste Fläche ergeben.

Außerdem kann vorgesehen sein, dass der Rechner
- zusätzlich mindestens ein Frästiefensignal bezüglich der aktuellen Frästiefe oder des aktuellen Frästiefenquerprofils erhält und der aktuellen Maschinenposition der jeweiligen Maschine zuordnet,
- die Frästrajektorien durch Erfassen der fortlaufenden Maschinenpositionen, an denen ein Fräsbetrieb stattfindet, hinsichtlich ihrer Länge berechnet und unter Einbeziehung der in Abhängigkeit der Maschinenposition aktuellen Frästiefe oder des Frästiefenquerprofils die bisher gefrästen Teilvolumina berechnet und aufsummiert,
- die aktuell gefrästen Teilvolumina fortlaufend oder nachträglich auf Überlappung oder mehrfache Überlappung mit den bisher aufsummierten Teilvolumina prüft und sich überlappende Volumina von den aufsummierten gefrästen Teilvolumina in Abzug bringt,
- wobei der Rechner das gefräste Volumen aus den aus der Frästiefe oder aus dem Frästiefenquerprofil und den fortlaufenden Maschinenpositionen der mindestens einen Maschine insgesamt aufsummierten Teilvolumina abzüglich der entsprechend bestimmten insgesamt festgestellten Überlappungsvolumina berechnet.

Im Folgenden wird unter Bezugnahme auf die Zeichnungen ein Ausführungsbeispiel der Erfindung näher erläutert.

Es zeigen:
- Fig. 1: eine Baumaschine in Form einer Straßenfräsmaschine,
- Fig. 2: eine Ansicht der Straßenfräsmaschine von hinten, und
- Fig. 3: verschiedene Frästrajektorien einer zu bearbeitenden Fläche.

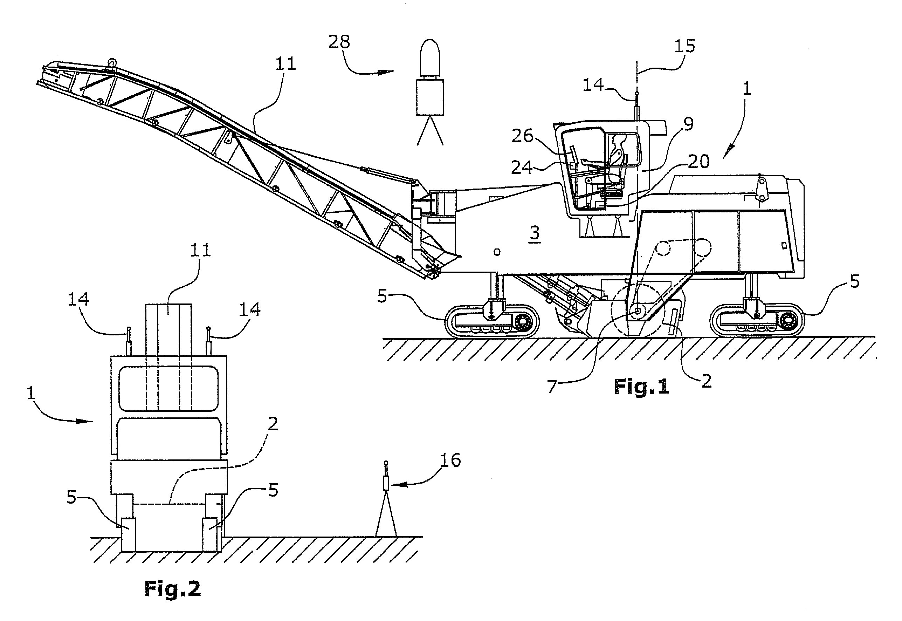

Die in Fig. 1 gezeigte Maschine 1 ist eine Baumaschine, nämlich eine Straßenfräsmaschine, und ist stellvertretend für alle Arten von Maschinen mit einer Fräswalze 2 dargestellt, die eine Boden- oder Verkehrsfläche bearbeiten.

Hierzu zählen auch Abbaumaschinen, mit denen z.B. im Tagebau Vorkommen abgebaut werden und auch als Surface Miner bezeichnet werden.

Die in Fig. 1 gezeigte Maschine 1 weist einen Maschinenrahmen 3 auf, in dem die Fräswalze 2 starr oder höhenverstellbar gelagert ist. Die Maschine 1 wird von einem Fahrwerk getragen, das in Fig. 1 von Kettenlaufwerken 5 gebildet ist. Das abgefräste Material kann mit einem Transportband 11 auf ein Transportfahrzeug geladen werden. Der Maschinenrahmen 3 trägt auf der Oberseite einen Fahrstand 9, der aus einer Kabine bestehen kann. In dem Fahrstand 9 sitzt oder steht eine Bedienungsperson, die mit Hilfe einer Maschinensteuerung 26 die Funktionen der Maschine 1 steuert. Diese Maschinenfunktionen sind beispielsweise Vorschubgeschwindigkeit, Lenkung, Frästiefe der Fräswalze 2, u.s.w. Die Maschine 1 ist mit einer Positionsbestimmungseinrichtung 24 versehen, die ihre Informationen an einen Rechner 20 zur weiteren Verarbeitung weiterleiten kann, wobei der Rechner 20 auch in die Maschinensteuerung 26 integriert sein kann. Desweiteren kann vorgesehen sein, dass die Positionsbestimmungseinrichtung 24 in den Rechner 20 integriert ist.

Über dem Fahrstand 9, z.B. auf dem Dach der Fahrkabine, kann ein GNSS-Empfänger 14 als Teil der Positionsbestimmungseinrichtung 24 angeordnet sein, der vorzugsweise so angeordnet ist, dass er in einer gemeinsamen vertikalen Ebene 15 mit der Fräswalzenachse 7 der Fräswalze 2 liegt, wenn die Maschine 1 horizontal ausgerichtet ist.

Der GNSS-Empfänger 14 bildet einen Referenzpunkt an der Maschine 1, mit dessen Hilfe die aktuelle Maschinenposition bestimmt werden kann.

Es können auch andere Referenzpunkte an der Maschine 1 ausgewählt werden, wobei dann die Positionsdaten zur Berechnung der Maschinenposition entsprechend korrigiert werden müssen. Die für die Berechnung relevante Maschinenposition ist die Mitte der Fräswalze 2, bezogen auf ihre Längserstreckung. Daher befindet sich ein einzelner GNSS-Empfänger 14 vorzugsweise vertikal über dieser Mittelposition der Fräswalze 2, wenn die Maschine 1 auf einer horizontalen Ebene steht bzw. der Maschinenrahmen 3 horizontal ausgerichtet ist. Auch wenn der GNSS-Empfänger exakt dort angebracht ist, müssen die Positionsdaten korrigiert werden. Auf eine Korrektur könnte nur verzichtet werden, wenn die Maschine zu jeder Zeit auf einer horizontalen Ebene arbeitet und dabei in Längs- sowie in Querrichtung parallel zu dieser ausgerichtet bleibt. Sobald eine Quer- oder Längsneigung der Maschine 1 zur Horizontalen vorliegt, muss eine Korrektur erfolgen, also nahezu immer. Hierzu sind entsprechende Neigungssensoren vorhanden.

Es besteht auch die Möglichkeit, zwei GNSS-Empfänger 14 zu verwenden, wie dies grundsätzlich aus Fig. 2 ersichtlich ist. Wesentlich ist, dass diese beiden GNSS-Empfänger 14 einen gegenseitigen Abstand aufweisen. Auch bei Einsatz von zwei GNSS-Empfängern 14, wie in Fig. 2 dargestellt, liegen diese vorzugsweise in der Ebene 15 und auf gleicher Höhe. Es versteht sich allerdings, dass die beiden GNSS-Empfänger 14 auch an anderen Stellen der Maschine 1 angeordnet sein können.

Die GNSS-Empfänger 14 sollen möglichst auf dem Dach des Fahrstandes 9 angeordnet sein, damit zum einen die Störung durch reflektierte Signale möglichst klein sind und zum anderen beim Durchfahren einer mit Bäumen berandeten Fräsfläche wenigstens ein GNSS-Empfänger 14 nicht durch die Bäume den Kontakt zu allen Satelliten verliert.

Zusätzlich können Referenzpositionsdaten eines ortsfesten GNSS-Empfängers 16 oder eines Datenreferenzdienstes verwendet werden, um die Genauigkeit der Bestimmung der Maschinenposition zu erhöhen. Als weitere Alternative zur Bestimmung der Maschinenposition kann eine Totalstation 28 verwendet werden, die einen Referenzpunkt an der Maschine dreidimensional verfolgen kann, wobei auch mehrere Totalstationen 28 zum Einsatz kommen können. Wenn eine Totalstation zum Einsatz kommt, dann muss der mindestens eine GNSS-Empfänger durch mindestens ein Messprisma ersetzt werden.

Mit Hilfe der Positionsbestimmungseinrichtung 24 kann die aktuelle Position der Maschine 1 aufgezeichnet werden und somit die Fahrstrecke entlang der Frästrajektorien 6 hinsichtlich ihrer Länge mit Hilfe eines internen oder externen Rechners 20 berechnet und gespeichert werden.

Zu Beginn einer zu erfassenden Fräsdienstleistung wird ein Speicher des Rechners 20, in dem die bereits gefräste Fläche 4 speicherbar ist, auf Null gesetzt. Wird nun eine in einem Auftrag vorgegebene Fläche durch mindestens eine Maschine 1 gefräst, wird mit Hilfe der ermittelten Daten zur Maschinenposition und deren fortlaufende Veränderung zunächst die Länge der Frästrajektorien 6 bestimmt und dann unter Berücksichtigung der installierten Breite FB der Fräswalze 2 die bisher gefräste Teilfläche 4 berechnet, und aufsummiert. Die bisher gefräste Teilfläche 4 wird in dem Speicher des Rechners 20 gespeichert, wobei die entlang der Frästrajektorie 6 gefräste Fläche 4 fortlaufend oder nachträglich auf Überlappung oder Mehrfachüberlappung mit bisher gefrästen Teilflächen 8 überprüft wird. Wird im Rechner eine Überlappung festgestellt, werden sich überlappende Teilflächen als Überlappungsflächen 10 von den aufsummierten, bisher gefrästen Teilflächen 8 im Speicher in Abzug gebracht. Beispielsweise können die Frästrajektorien 6 mit Hilfe von zweidimensionalen oder dreidimensionalen Koordinaten gespeichert werden. Die Maschinensteuerung bzw. die Bedienungsperson teilt dem Rechner mit, ob aktuell ein Fräsbetrieb stattfindet oder nicht, so dass Leerfahrten der Maschine 1 nicht erfasst werden. Im Falle der Erfassung der Frästiefe zur Berechnung der gefrästen Volumina kann auf eine solche Mitteilung an den Rechner verzichtet werden, da der Rechner anhand der eingestellten Frästiefe selbst feststellen kann, ob aktuell ein Fräsbetrieb stattfindet. Anstelle der eingestellten Frästiefe kann auch die effektive Frästiefe verwendet werden, wenn diese in der Maschinensteuerung vorliegt. Alternativ könnten andere Signale aus der Maschinensteuerung verwendet werden, z.B. ein Einschaltsignal für die Fräswalze oder ein Einschaltsignal für das Transportband zum Abtransportieren des Fräsgutes oder Signale aus der Motorsteuerung, z.B. das Drehmoment des Antriebsmotors für die Fräswalze.

Bei Beendigung und Abschluss des Auftrags ist aus dem Speicher die tatsächlich gefräste Fläche 4 abrufbar, so dass der dort gespeicherte und vollautomatisch ermittelte Wert als Basis für die Abrechnung mit einem Auftraggeber benutzt werden kann.

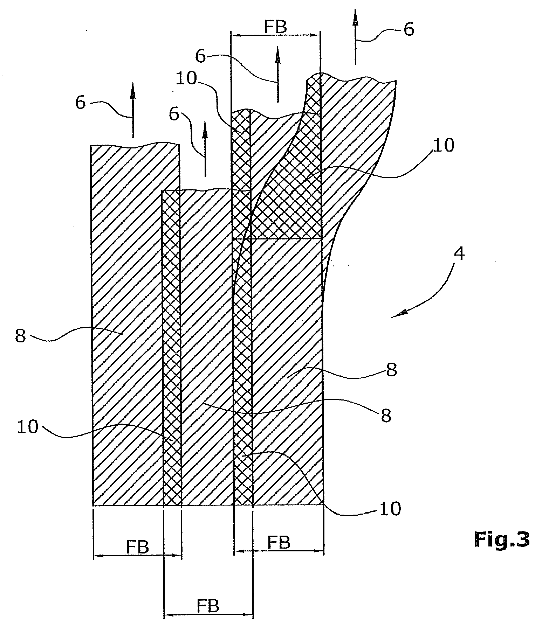

Fig. 3 zeigt mehrere nebeneinander angeordnete Frästrajektorien 6 auf einer zu fräsenden Fläche 4.

Es sind in Fig. 3 zusätzlich die bisher gefrästen Teilflächen 8 und die dadurch entstehenden Überlappungsflächen 10 dargestellt, die aus den längs der Frästrajektorie 6 aufsummierten Flächen in Abzug zu bringen sind. Bei dem in Fig. 3 gezeigten Beispiel einer zu fräsenden Fläche 4 sind vier Frästrajektorien 6 unterschiedlicher Länge mit z.T. mehrfachen Überlappungen ersichtlich.

In bestimmten Fällen, z.B. in denen der Fräsauftrag unterschiedliche Frästiefen beinhaltet, kann es notwendig sein, als Basis zur Abrechnung des Dienstleistungsauftrags, nicht die gefräste Fläche zugrunde zu legen, sondern das gefräste Volumen.

In diesem Fall ist vorgesehen, zusätzlich zur Bestimmung der Länge der Frästrajektorien 6 und der gefrästen Flächen, zusätzlich die aktuelle Frästiefe aufzuzeichnen, so dass der Rechner 20 das gefräste Volumen bestimmen kann. Die aktuelle Frästiefe kann in Relation zur Mitte der Fräswalze 2 bezogen auf ihre Längsrichtung bestimmt werden. Alternativ kann das aktuelle Frästiefenquerprofil quer zur Breite der Maschine 1 aus den Daten der Maschinensteuerung entnommen werden und in Abhängigkeit der Maschinenposition erfasst werden. Das gefräste Volumen ergibt sich dann aus den insgesamt aufsummierten Teilvolumina abzüglich der insgesamt festgestellten Überlappungsvolumina.

Die aktuelle Frästiefe kann ggf. auch gemessen werden, wenn sie nicht aus der Maschinensteuerung 26 ausgelesen werden soll.

Im Falle von mehreren Maschinen 1 ist für jede Maschine mindestens ein Referenzpunkt vorgesehen.

Im Falle von mehreren Maschinen kann eine der Maschinen 1 als federführend bestimmt werden.

Insbesondere bei mehreren Maschinen 1 kann der Rechner 20 auch extern ortsfest angeordnet sein oder in der federführenden Maschine 1 angeordnet sein, wobei der Datenaustausch von Positionsdaten, Referenzpositionsdaten oder Ersatzdaten aus der Maschinensteuerung 26 aller Maschinen 1 drahtlos, z.B. über Satellit oder Mobilfunkstrecke, erfolgt.

Der Rechner 20 kann bei Empfangsstörungen des mindestens einen an einer Maschine 1 angebrachten GNSS-Empfängers 14 zu fehlenden oder offensichtlich fehlerhaften Positionsdaten Ersatzdaten berechnen und die fehlenden Positionsdaten ergänzen bzw. die fehlerhaften Positionsdaten ersetzen. Dies kann durch Interpolation aus in Relation zum Zeitpunkt der Empfangsstörung früheren und späteren Positionsdaten berechnet werden. Alternativ können Ersatzdaten aus in der jeweiligen Maschinensteuerung 26 einer Maschine 1 aufgezeichneten Vorschub- und Lenkwinkeldaten berechnet werden.

## Patentansprüche

1. Verfahren zum Bestimmen einer von mindestens einer Baumaschine oder mindestens einer Abbaumaschine mit einer Fräswalze (2) gefrästen Fläche (4) durch
- Bearbeiten der vorgegebenen Fläche (4) in mehreren Frästrajektorien (6) durch mindestens eine Maschine (1),
- Bestimmen der Länge der Frästrajektorien (6), an denen ein Fräsbetrieb stattgefunden hat, durch Auswerten der fortlaufenden Maschinenpositionen,
- Aufsummieren der bisher gefrästen Teilflächen (8) als Produkt der Länge der Frästrajektorie (6) und der installierten Breite (FB) der Fräswalze, wobei die entlang der Frästrajektorie (6) aktuell gefräste Teilfläche fortlaufend oder nachträglich auf Überlappung oder mehrfache Überlappung mit bisher gefrästen Teilflächen (8) geprüft wird und sich überlappende Teilflächen (8) als Überlappungsflächen (10) von den aufsummierten bisher gefrästen Teilflächen (8) in Abzug gebracht werden, wobei
- die insgesamt aufsummierten gefrästen Teilflächen (8) abzüglich der insgesamt festgestellten Überlappungsflächen (10) die gefräste Fläche (4) ergeben.

2. Verfahren nach Anspruch 1, **dadurch gekennzeichnet, dass** die Maschinenposition einer jeden Maschine (1) anhand mindestens eines Referenzpunktes an der Maschine (1) bestimmt wird.

3. Verfahren nach einem der Ansprüche 1 oder 2, **dadurch gekennzeichnet, dass** zum Bestimmen der Maschinenposition mindestens ein GNSS-Empfänger (14) verwendet wird.

4. Verfahren nach Anspruch 3, **dadurch gekennzeichnet, dass** zusätzlich Referenzpositionsdaten eines ortsfesten GNSS-Empfängers (16), oder eines Datenreferenzdienstes verwendet werden.

5. Verfahren nach einem der Ansprüche 1 oder 2, **dadurch gekennzeichnet, dass** zur Bestimmung der Maschinenposition mindestens eine Totalstation (28) verwendet wird.

6. Verfahren nach einem der Ansprüche 3 oder 4, **dadurch gekennzeichnet, dass** bei Empfangsstörungen des mindestens einen an der Maschine (1) angebrachten GNSS-Empfängers (14) die fehlenden oder fehlerhaften Positionsdaten aufgrund des bisherigen und weiteren Verlaufs der Frästrajektorien (6) oder aufgrund aufgezeichneter Vorschub- und Lenkwinkeldaten der Maschine (1) berechnet oder korrigiert werden.

7. Verfahren nach einem der Ansprüche 3 bis 6, **dadurch gekennzeichnet, dass** die Positionsdaten und/oder die Referenzpositionsdaten drahtlos auf einen externen Rechner (20) übertragen werden.

8. Verfahren nach einem der Ansprüche 1 bis 7, **dadurch gekennzeichnet, dass** zum Bestimmen des gefrästen Volumens entlang der Frästrajektorien (6) die aktuelle Frästiefe in der Mitte der Fräswalze (2) oder das aktuelle Frästiefenquerprofil der Maschine (1) in Abhängigkeit der Maschinenposition erfasst wird, wobei sich das gefräste Volumen aus den insgesamt aufsummierten Teilvolumina abzüglich der insgesamt festgestellten Überlappungsvolumina ergibt.

9. Baumaschine oder Abbaumaschine zum Bearbeiten einer vorgegebenen Fläche (4) in mehreren Frästrajektorien (6) durch mindestens eine Maschine, mit jeweils einer Fräswalze (2) einer vorgegebenen Fräsbreite, einer Positionsbestimmungseinrichtung (24) und einer Maschinensteuerung (26),
**dadurch gekennzeichnet, dass**
- die Positionsbestimmungseinrichtung (24) einer jeden Maschine (1) Positionsdaten der mindestens einen Maschine (1) erzeugt,
- ein Rechner (20) für alle Maschinen die Positionsdaten der jeweiligen Maschine (1) erhält und in Verbindung mit der Fräsbreite (FB) der jeweils installierten Fräswalze (2) aus den fortlaufenden Positionsdaten die Länge der jeweiligen Frästrajektorie (6), an denen Fräsbetrieb stattfindet und die gefräste Fläche (4) entlang dieser Frästrajektorie (6) berechnet und als bisher gefräste Teilfläche (8) aufsummiert,
- der Rechner (20) die aktuell gefräste Teilfläche aller Maschinen fortlaufend oder nachträglich auf Überlappung oder mehrfache Überlappung mit bisher aufsummierten Teilflächen (8) aller Maschinen prüft,
- der Rechner (20) sich überlappende Teilflächen (8) als Überlappungsflächen (10) von den aufsummierten gefrästen Teilflächen (8) in Abzug bringt,
- wobei die insgesamt aufsummierten bisher gefrästen Teilflächen (8) abzüglich der insgesamt berechneten Überlappungsflächen (10) die gefräste Fläche (4) ergeben.

10. Baumaschine oder Abbaumaschine nach Anspruch 9, **dadurch gekennzeichnet, dass** der Rechner (20) die Maschinenposition einer Maschine (1) anhand mindestens eines Referenzpunktes an der Maschine (1) bestimmt.

11. Baumaschine oder Abbaumaschine nach einem der Ansprüche 9 oder 10, **dadurch gekennzeichnet, dass** die Positionsbestimmungseinrichtung (24) zur Bestimmung der Maschinenposition einer Maschine (1) die Positionsdaten von mindestens einem GNSS-Empfänger (14) erhält.

12. Baumaschine oder Abbaumaschine nach Anspruch 11, **dadurch gekennzeichnet, dass** die Positionsbestimmungseinrichtung (24) zusätzlich Referenzpositionsdaten von einem ortsfesten GNSS-Empfänger (16) oder von einem Datenreferenzdienst erhält.

13. Baumaschine oder Abbaumaschine nach Anspruch 9 oder 10, **dadurch gekennzeichnet, dass** der Rechner (20) zur Bestimmung der Maschinenposition einer Maschine (1) die Positionsdaten von einer Totalstation (28) erhält.

14. Baumaschine oder Abbaumaschine nach Anspruch 13, **dadurch gekennzeichnet, dass** der Datenaustausch von Positionsdaten, Referenzpositionsdaten oder Ersatzdaten aus der jeweiligen Maschinensteuerung (26) der mindestens einen Maschine (1) drahtlos erfolgt.

15. Baumaschine oder Abbaumaschine nach einem der Ansprüche 9 bis 14, **dadurch gekennzeichnet, dass** der Rechner (20)
- zusätzlich mindestens ein Frästiefensignal bezüglich der aktuellen Frästiefe oder des aktuellen Frästiefenquerprofils erhält und der aktuellen Maschinenposition der jeweiligen Maschine (1) zuordnet,
- die Frästrajektorien (6) durch Erfassen der fortlaufenden Maschinenpositionen, an denen ein Fräsbetrieb stattfindet, hinsichtlich ihrer Länge berechnet und unter Einbeziehung der in Abhängigkeit der Maschinenposition aktuellen Frästiefe oder des Frästiefenquerprofils die bisher gefrästen Teilvolumina berechnet und aufsummiert,
- die aktuell gefrästen Teilvolumina fortlaufend oder nachträglich auf Überlappung oder mehrfache Überlappung mit den bisher aufsummierter Teilvolumina prüft und sich überlappende Volumina von den aufsummierten gefrästen Teilvolumina in Abzug bringt,
- wobei der Rechner (20) das gefräste Volumen aus den aus der Frästiefe oder aus dem Frästiefenquerprofil und den fortlaufenden Maschinenpositionen der mindestens einen Maschine (1) insgesamt aufsummierten Teilvolumina abzüglich der entsprechend bestimmten insgesamt festgestellten Überlappungsvolumina berechnet.

## Claims

1. Method for determining an area (4) milled by at least one construction machine or at least one mining machine by means of a milling drum (2) by means of
- working the predetermined area (4) in several milling trajectories (6) by at least one machine (1),
- determining the length of the milling trajectories (6) along which a milling operation has taken place by evaluating the continuous machine positions,
- adding up the previously milled partial areas (8) as a product of the length of the milling trajectory (6) and the installed milling width (FB) of the milling drum, wherein the partial area currently milled along the milling trajectory (6) is checked, either continuously or subsequently, for overlapping or multiple overlapping with any previously milled partial areas (8), and partial areas (8) which overlap are deducted, as overlapping areas (10), from the added-up previously milled partial areas (8), wherein
- the total added-up partial areas milled (8) minus the total overlapping areas (10) established give the milled area (4).

2. Method in accordance with claim 1, **characterized in that** the machine position of each single machine (1) is determined by means of at least one reference point on the machine (1).

3. Method in accordance with one of the claims 1 or 2, **characterized in that** at least one GNSS receiver (14) is used to determine the machine position.

4. Method in accordance with claim 3, **characterized in that**, in addition, reference positioning data from a stationary GNSS receiver (16) or a data reference service are used.

5. Method in accordance with one of the claims 1 or 2, **characterized in that** at least one total station (28) is used to determine the machine position.

6. Method in accordance with one of the claims 3 or 4, **characterized in that**, in the event of interferences with reception of the at least one GNSS receiver (14) attached to the machine (1), the missing or incorrect positioning data are computed or corrected based on the previous and further course of the milling trajectories (6) or based on recorded advance speed and steering angle data of the machine (1).

7. Method in accordance with one of the claims 3 to 6, **characterized in that** the positioning data and/or the reference positioning data are transmitted wirelessly to an external computer (20).

8. Method in accordance with one of the claims 1 to 7, **characterized in that**, to determine the volume milled along the milling trajectories (6), the current milling depth in the centre of the milling drum (2) or the current milling depth cross-section of the machine (1) is recorded in accordance with the position of the machine, with the milled volume resulting from the total added-up partial volumes minus the total overlapping volumes established.

9. Construction machine or mining machine for working a predetermined area (4) in several milling trajectories (6) by at least one machine, with a milling drum (2) each of a predetermined milling width, a position determination device (24) and a machine control system (26)
**characterized in that**
- the position determination device (24) of each single machine (1) generates positioning data of the at least one machine (1),
- one computer (20) for all machines receives the positioning data of the respective machine (1) and in connection with the milling width of the milling drum (2) installed in each case computes, from the continuous positioning data, the length of the respective milling trajectory (6) along which a milling operation is taking place and the area (4) milled along said milling trajectory (6), adding it up as a previously milled partial area (8),
- the computer (20) checks, either continuously or subsequently, the currently milled partial area of all machines for overlapping or multiple overlapping with previously added-up partial areas (8) of all machines,
- the computer (20) deducts partial areas (8) which overlap, as overlapping areas (10), from the added-up partial areas (8) milled,
- wherein the total added-up previously milled partial areas (8) minus the total overlapping areas (10) computed give the milled area (4).

10. Construction machine or mining machine in accordance with claim 9, **characterized in that** the computer (20) determines the machine position of a machine (1) based on at least one reference point on the machine (1).

11. Construction machine or mining machine in accordance with one of the claims 9 or 10, **characterized in that** the position determination device (24) receives the positioning data from at least one GNSS receiver (14) to determine the machine position of a machine (1).

12. Construction machine or mining machine in accordance with claim 11, **characterized in that** the position determination device (24) additionally receives reference positioning data from a stationary GNSS receiver (16) or from a data reference service.

13. Construction machine or mining machine in accordance with claim 9 or 10, **characterized in that** the computer (20) receives the positioning data from a total station (28) to determine the machine position of a machine (1).

14. Construction machine or mining machine in accordance with claim 13, **characterized in that** the data exchange of positioning data, reference positioning data or substitute data from the respective machine control system (26) of the at least one machine (1) is effected wirelessly.

15. Construction machine or mining machine in accordance with one of the claims 9 to 14, **characterized in that** the computer (20)
- additionally receives at least one milling depth signal with respect to the current milling depth or current milling depth cross-section and attributes said milling depth signal to the current machine position of the respective machine (1),
- computes the milling trajectories (6) in terms of their length by recording the continuous machine positions at which a milling operation is taking place, and computes and adds up the previously milled partial volumes, taking into account the current milling depth or the milling depth cross-section in accordance with the machine position,
- checks, either continuously or subsequently, the currently milled partial volumes for overlapping or multiple overlapping with the previously added-up partial volumes and deducts any overlapping volumes from the added-up partial volumes milled,
- wherein the computer (20) computes the milled volume from the total partial volumes added up from the milling depth or from the milling depth cross-section and the continuous machine positions of the at least one machine (1) minus the total established overlapping volumes determined accordingly.

## Revendications

1. Procédé destiné à la détermination une surface fraisée (4) d'au moins une machine de chantier ou d'au moins une machine d'abattage avec un tambour de fraisage (2) par :
- traitement de la surface (4) prédéfinie en plusieurs trajectoires de fraisage (6) par l'intermédiaire d'au moins une machine (1),
- détermination de la longueur des trajectoires de fraisage (6), au niveau desquelles une opération de fraisage a eu lieu, par évaluation des positions en continu de la machine,
- addition des surfaces partielles (8) fraisées jusque là, comme un produit de la longueur de la trajectoire de fraisage (6) et de la largeur installée (FB) du tambour de fraisage, la surface partielle fraisée jusque là le long de la trajectoire de fraisage (6) étant vérifiée en continu ou a posteriori pour voir s'il y a un chevauchement ou un chevauchement multiple avec des surfaces partielles (8) fraisées jusque là et les surfaces partielles (8) se chevauchant comme des surfaces de chevauchement (10) étant déduites des surfaces partielles (8) fraisées jusque là, additionnées,
- les surfaces partielles (8), fraisées, additionnées au total donnant la surface fraisée (4), soustraction faite des surfaces de chevauchement (10) constatées au total.

2. Procédé selon la revendication 1, **caractérisé en ce que** la position de machine de chacune des machines (1) est déterminée à l'aide de au moins d'un point de référence au niveau de la machine (1).

3. Procédé selon l'une des revendications 1 ou 2, **caractérisé en ce qu'**au moins un récepteur GNSS (14) est employé à des fins de détermination de la position de la machine.

4. Procédé selon la revendication 3, **caractérisé en ce que** des données de la position de référence d'un récepteur GNSS (16), disposé de manière fixe, ou d'un service de référencement des données sont en outre employées.

5. Procédé selon l'une des revendications 1 ou 2, **caractérisé en ce qu'**au moins une station totale (28) est employée à des fins de détermination de la position de la machine.

6. Procédé selon l'une des revendications 3 ou 4, **caractérisé en ce qu'**en cas de perturbations de la réception de l'un au moins des récepteurs GNSS (14) mis en place au niveau de la machine (1), les données manquantes ou erronées de la position sont calculées ou corrigées sur la base de l'évolution des trajectoires de fraisage (6) constatées jusque là et par la suite, ou sur la base des données de l'avance et de l'angle de braquage enregistrées de la machine (1).

7. Procédé selon l'une des revendications 3 à 6, **caractérisé en ce que** les données de la position et/ou les données de la position de référence sont transmises sans fil à un ordinateur (20) externe.

8. Procédé selon l'une des revendications 1 à 7, **caractérisé en ce qu'**à des fins de détermination du volume fraisé le long des trajectoires de fraisage (6), la profondeur actuelle de fraisage au centre du tambour de fraisage (2) ou le profil transversal actuel de la profondeur de fraisage de la machine (1) est calculé(e) en fonction de la position de la machine, le volume fraisé étant obtenu à partir des volumes partiels additionnés au total, soustraction faite des volumes de chevauchement constatés au total.

9. Machine de chantier ou machine d'abattage destinée au traitement d'une surface (4) prédéfinie en plusieurs trajectoires de fraisage (6) par l'intermédiaire d'au moins une machine, avec respectivement un tambour de fraisage (2) d'une largeur de fraisage prédéfinie, un système de détermination de la position (24) et un équipement de guidage de machine (26),
**caractérisée en ce que**
- le système de détermination de la position (24) de chacune des machines (1) génère des données de la position de l'une au moins des machines (1),
- un ordinateur (20) reçoit, pour toutes les machines, les données de la position de la machine (1) respective et, en relation avec la largeur de fraisage (FB) du tambour de fraisage (2) respectivement installé, issues des données de la position en continu, calcule la longueur de la trajectoire de fraisage (6) respective, au niveau de laquelle l'opération de fraisage a lieu, et la surface fraisée (4) le long de cette trajectoire de fraisage (6) et les additionne comme la surface partielle (8) fraisée jusque là.
- l'ordinateur (20) vérifie la surface partielle, fraisée jusque là, de toutes les machines, en continu ou a posteriori, pour voir s'il y a un chevauchement ou un chevauchement multiple avec des surfaces partielles (8), additionnées jusque là, de toutes les machines,
- l'ordinateur (20) soustrait les surfaces partielles (8) se chevauchant des surfaces partielles (8), fraisées, additionnées, comme des surfaces de chevauchement (10),
- les surfaces partielles (8), fraisées jusque là, additionnées au total, donnant la surface fraisée (4), soustraction faite des surfaces de chevauchement (10) calculées au total.

10. Machine de chantier ou machine d'abattage selon la revendication 9, **caractérisée en ce que** l'ordinateur (20) détermine la position de la machine d'une machine (1) à l'aide d'au moins un point de référence au niveau de la machine (1).

11. Machine de chantier ou machine d'abattage selon l'une des revendications 9 ou 10, **caractérisée en ce que** le système de détermination de la position (24), destiné à la détermination de la position de la machine d'une machine (1), reçoit les données de la position d'au moins un récepteur GNSS (14).

12. Machine de chantier ou machine d'abattage selon la revendication 11, **caractérisée en ce que** le système de détermination de la position (24) reçoit en outre des données de la position de référence depuis un récepteur GNSS (16) disposé de manière fixe, ou depuis un service de référencement des données.

13. Machine de chantier ou machine d'abattage selon la revendication 9 ou 10, **caractérisée en ce que** l'ordinateur (20) destiné à la détermination de la position de la machine d'une machine (1) reçoit les données de la position depuis une station totale (28).

14. Machine de chantier ou machine d'abattage selon la revendication 13, **caractérisée en ce que** l'échange de données des données de la position, des données de la position de référence ou des données de remplacement a lieu sans fil à partir de l'équipement de guidage de machine (26) respectif d'au moins l'une des machines (1).

15. Machine de chantier ou machine d'abattage selon l'une des revendications 9 à 14, **caractérisée en ce que** l'ordinateur (20)
- reçoit en outre au moins un signal de la profondeur de fraisage concernant la profondeur actuelle de fraisage ou le profil transversal actuel de la profondeur de fraisage et l'attribue à la position actuelle de machine de la machine (1) respective,
- calcule les trajectoires de fraisage (6), au niveau desquelles une opération de fraisage a lieu, au regard de leur longueur en enregistrant les positions en continu de la machine, et calcule et additionne les volumes partiels, fraisés jusque là, en tenant compte de la profondeur actuelle de fraisage ou du profil transversal de la profondeur de fraisage, en fonction de la position de la machine,
- vérifie les volumes partiels, fraisés jusque là, en continu ou a posteriori, pour voir s'il y a un chevauchement ou un chevauchement multiple avec les volumes partiels, additionnés jusque là, et soustrait les volumes se chevauchant des volumes partiels, fraisés, additionnés,
- l'ordinateur (20) calculant le volume fraisé à partir des volumes partiels, additionnés au total à partir de la profondeur de fraisage ou à partir du profil transversal de la profondeur de fraisage et des positions en continu de machine d'au moins l'une des machines (1), soustraction faite des volumes de chevauchement constatés au total et déterminés en conséquence.
